# FASCICULE DE BREVET EUROPEEN

(11) **EP 0 459 862 B1**
(45) Date de publication et mention de la délivrance du brevet: **30.07.1997**
(21) Numéro de dépôt: 91401294.3
(22) Date de dépôt: 17.05.1991
(51) Int. Cl.: C08L 77/12, C08L 77/00

(54) **Compositions d 'élastomères thermoplastiques à base de polyamide et de polyoléfines modifiées, pièces moulées ou extrudées, films et matériaux composites obtenus à partir desdites compositions**
Zusammensetzungen thermoplastischer Elastomere auf der Basis von Polyamiden und modifizierten Polyolefinen, geformte oder extrudierte Körper, Filme und Verbundmaterialien hergestellt aus diesen
Compositions of thermoplastic elastomers based on polyamides and modified polyolefins, moulded or extruded articles, films and composite materials produced therefrom

(30) Priorité: 01.06.1990 FR 9006869
(43) Date de publication de la demande: 04.12.1991
(73) Titulaire: ELF ATOCHEM S.A., 92800 Puteaux (FR)
(72) Inventeur: Vasselin, Thierry, F-27000 Evreux (FR); Vuachet, Michel, F-69500 Bron (FR)
(74) Mandataire: Neel, Henry

(56) Documents cités:
- EP-A- 230 815
- EP-A- 303 489
- EP-A- 328 439
- FR-A- 2 519 012
- US-A- 4 581 410
- US-A- 4 698 242
- PATENT ABSTRACTS OF JAPAN vol. 11, no. 96 (C-412)(2543) 26 mars 1987, & JP-A-61 246244
- PATENT ABSTRACTS OF JAPAN vol. 12, no. 40 (C-474)(2887) 05 février 1988, & JP- A-62 190247

## Description

La présente invention a pour objet des matériaux multicouches comprenant une composition d'élastomère(s) thermoplastique(s) (TPE)(b) à base de polyesteramide ou polyétheramide et de polyoléfine(s) modifiée(s).

Dans la demande de brevet FR 2 523 143, on a décrit des compositions contenant des copolymères à base d'éthylène (au moins 35 % en poids) et d'au moins un ester vinylique et contenant de 0,5 à 20 % d'un copolyétheresteramide qui sont utilisables comme adhésifs thermofusibles (hot-melts).

Dans la demande de brevet J 62-84141, on a décrit des compositions de résines préparées par mélange à l'état fondu de 100 parties en poids de polyétheresteramide et de 3 à 50 parties en poids d'un copolymère d'éthylène et d'acétate de vinyle greffé chlorure de vinyle.

Les matériaux multicouches *selon l'invention comprennent* :
a une couche de polyamide aliphatique ou polyamide amorphe ou polyesteramide ou polyétheramide ou copolymère EVOH,
b un film comprenant un mélange :
   b1 de polyesteramide ou polyétheramide
   b2 d'une polyoléfine modifiée et tel que b1 / (b1 + b2) en poids est supérieur à 50 %.
   La polyoléfine modifiée étant choisie parmi :
   - les copolymères comprenant (i) un monomère d'éthylène ou d'alpha oléfine ou éventuellement de dioléfine et (ii) au moins un comonomère choisi parmi les esters vinyliques d'acide carboxylique saturé, les acides mono- et dicarboxyliques insaturés, leurs esters, sels, les anhydrides d'acides dicarboxyliques ; ces copolymères comprenant au moins 50 % en poids d'oléfines ;
   - les copolymères blocs SBS, SIS ou SEBS maléisés.

Selon une autre caractéristique de l'invention, les couches coextrudées a et b sont collées par formage à chaud du côté de la couche b sur un support rigide. Ledit support, recouvert ou imprégné de résine époxyde, peut être à base de polyester ou de polyuréthane.

Selon une autre forme de l'invention, le support peut être un film de polycarbonate.

Selon une autre caractéristique de l'invention, le matériau multicouches peut comprendre successivement :
- un tissu
- le film b de la revendication 1
- une mousse thermodurcissable.

Les compositions (b) selon l'invention comprennent au moins un élastomère thermoplastique à base de polyamide et au moins une polyoléfine modifiée et sont tels que le(s) élastomère(s) thermoplastique(s) représentent au moins 50 % et de préférence au moins 60 % du poids total d'élastomère thermoplastique(s) et de polyoléfine(s) modifiée(s).

Les élastomères thermoplastiques ou TPE à base de polyamide peuvent être des copolymères statistiques ou séquencés.

Les copolymères statistiques sont formés par l'enchaînement aléatoire des divers constituants (monomères et/ou prépolymères) tandis que les copolymères séquencés ou blocs préférés par la demanderesse, sont formés à partir de blocs présentant une certaine longueur de chaîne de leurs divers constituants.

Les copolymères à base de polyamide selon l'invention sont soit des polyesteramides soit des polyétheramides.

Les polyétheramides séquencés ou polyéther bloc amides peuvent notamment résulter de la copolycondensation de séquences polyamides à extrémités réactives avec des séquences polyéthers à extrémités réactives, telles que, entre autre :
a) Séquences polyamides à bouts de chaînes diamines avec des séquences polyoxyalkylènes à bouts de chaînes dicarboxyliques.
b) Séquences polyamides à bouts de chaînes dicarboxyliques avec des séquences polyoxyalkylènes à bouts de chaînes diamines obtenues par cyanoéthylation et hydrogénation de séquences polyoxyalkylènes alpha,oméga dihydroxylées aliphatiques appelées polyétherdiols.
c) Séquences polyamides à bouts de chaînes dicarboxyliques avec des polyétherdiols, appelés polyétheresteramides, particulièrement préférés par la demanderesse.

La composition et la fabrication de tels polyétheresteramides ont été décrites dans les brevets français FR 2 273 021 et FR 2 401 947 au nom de la demanderesse dont le contenu s'ajoute à la présente description.

La masse moléculaire moyenne en nombre de ces séquences polyamides est généralement comprise entre 500 et 10 000 et plus particulièrement entre 600 et 5 000. Les séquences polyamides des polyétheresteramides sont formées de préférence de polyamide aliphatique et/ou de polyamide amorphe ou de copolyamide résultant de la polycondensation de leurs monomères.

La masse moléculaire moyenne en nombre des polyéthers est comprise généralement entre 200 et 6 000 et plus particulièrement entre 600 et 3 000.

Les séquences polyéthers consistent le plus souvent en polytétraméthylène glycol (PTMG), polyéthylène glycol (PEG) et/ou de polypropylène glycol (PPG).

La viscosité inhérente des polyétheresteramides est avantageusement comprise entre 0,8 et 2,05. Elle est mesurée dans le métacrésol à 20°C avec une concentration initiale de 0,5 g de polymère pour 100 g de métacrésol.

Les polyétheresteramides peuvent être formés de 5 à 85 % en poids de polyéther, et de 95 à 15 % en poids de polyamide, et de préférence de 30 à 85 % en poids de polyéther et de 70 à 15 % en poids de polyamide.

Les polyétheresteramides préférés par la demanderesse sont ceux dont les séquences polyamides sont essentiellement constituées de PA-11, 12 et/ou 12.12 et lorsque l'on recherche une composition ayant des propriétés antistatiques, on utilise de préférence des polyetheresteramides dont les séquences polyéthers sont essentiellement constituées de polyéthylène glycol (PEG).

Par polyoléfines modifiées, on entend des copolymères comprenant :
- un monomère d'éthylène ou d'α-oléfine ou éventuellement de dioléfine
- au moins un comonomère choisi parmi les esters vinyliques d'acide carboxylique saturé, les acides mono- et di-carboxyliques insaturés, leurs esters, sels, les anhydrides d'acides dicarboxylique saturé ou non
   l'oléfine représentant au moins 50 % et de préférence au moins 60 % du poids total du copolymère
   étant entendu que les copolymères peuvent être polymérisés de façon statistique ou séquencée et présenter une structure linéaire ou ramifiée, pour les polyoléfines modifiées selon l'invention.

A titre d'exemple, on peut citer :
∗ les copolymères d'éthylène et d'acétate de vinyle, (EVA) maléisés ou non, particulièrement, préférés par la demandelesse, (l'anhydride maléique pouvant être greffé ou terpolymérisé) contenant de 2 à 40 % en poids d'acétate de vinyle, de 0 à 0,5 % en poids d'anhydride maléique greffé ou de 0 à 10 % en poids d'anhydride maléique terpolymérisé par rapport au poids total du copolymère
∗ les copolymères d'éthylène et d'acide (méth)acrylique contenant de 2 à 40 % en poids d'acide par rapport au poids total du copolymère
∗ les copolymères d'éthylène, d'acétate de vinyle et éventuellement d'acide (méth)acrylique et/ou de (méth)acrylate d'alkyle (tel que le méthacrylate de glycidyle) contenant de 2 à 40 % en poids d'acétate de vinyle et de 0 à 9 % en poids d'acide (méth)acrylique et/ou de (méth)acrylate d'alkyle
∗ les copolymères d'éthylène, de (méth)acrylate d'alkyle (tel que acrylate de méthyle, éthyle, N-butyle) et éventuellement d'anhydride maléique contenant de 2 a 40 % en poids de (méth)acrylate d'alkyle et de 0 à 8 % en poids d'anhydride par rapport au poids total du copolymère

Par polyoléfines modifiées, on entend également les copolymères blocs à base de styrène et notamment ceux constitués de séquences de polystyrène et séquences de polybutadiène (SBS), de séquences de polystyrène et de séquences de polyisoprène (SIS), de séquences de polystyrène et de poly(éthylène-butylène) (SEBS) contenant de 0,2 à 0,8 % en poids d'anhydride maléique et de 30 à 55 % de styrène pour les SBS de 15 à 25 % pour les SIS et de 13 à 32 % pour les SEBS.

Aux compositions décrites ci-dessus, on peut incorporer divers autres constituants tels que des charges, des pigments ou colorants, divers additifs.

A titre d'exemple de charges, on peut citer les fibres de verre, de carbone, aramides, le talc, la silice, le kaolin, les billes et fibres de verre, les céramiques, les charges métalliques, les sels et les oxydes métalliques tels que poudre d'aluminium, carbonates de calcium et de manganèse, poudre de ferrite, oxyde de titane.

En général on peut incorporer jusqu'à 50 % et de préférence jusqu'à 40 % en poids de charges par rapport aux compositions d'élastomère(s) thermoplastiques(s) et de polyoléfine(s) modifié(s) proprement dites.

A titre d'exemple d'additifs, on peut citer des agents anti-UV, des agents démoulants, des modifiants choc.

Les compositions (b) selon l'invention peuvent notamment être préparées par compoundage ; les constituants, le plus souvent sous forme de granulés de diamètre moyen inférieur à 5 mm, sont mélangés à l'état fondu en général dans un malaxeur à une température comprise entre 190 et 250 °C.

En raison de leur mise en oeuvre aisée, de leurs bonnes propriétés mécaniques (notamment résistance au choc à froid, à l'abrasion, résistance à la déchirure...), de leur stabilité dimensionnelle entre -20 et 60°C, de leur bon comportement au vieillissement ainsi que de leur excellente aptitude au collage et à la décoration, les compositions (b) selon l'invention peuvent être utilisées sous des formes très diverses (pièces moulées ou extrudées, films, feuilles, fibres) seules ou pour la réalisation d'objets complexes ou composites : pièces surmoulées, films coextrudés.

Les pièces moulées ou extrudées peuvent être obtenues selon les techniques connues de moulage et d'extrusion, les températures de mise en oeuvre étant d'une manière générale similaires à celles du compoundage des constituants des compositions selon l'invention (± 20°C en général).

Les films ou feuilles fabriqués à partir des compositions (b) selon l'invention sont obtenus selon tout procédé d'extrusion connu tel que l'extrusion-calandrage à plat, l'extrusion-plaxage, l'extrusion-soufflage, la température d'extrusion étant en général comprise entre 190 et 250°C.

Selon Modern Plastics Encyclopedia, on réserve le terme "film" à des objets de section plane dont l'épaisseur est inférieure à 250 µm et le terme "feuille" à des objets d'épaisseur supérieure et pouvant atteindre plusieurs mm, mais dans tout ce qui suit et pour des raisons de simplification, on pourra utiliser l'un ou l'autre des termes pour désigner simultanément films et feuilles.

Les films obtenus à partir des compositions (b) selon l'invention sont utilisés dans la fabrication de films multicouches obtenus par exemple par co-extrusion, contre-collage à chaud.

Les matériaux de l'invention peuvent être utilisés seuls, par exemple dans le domaine de l'emballage pour la réalisation de gaines, sac...

Les films des compositions b sont particulièrement aptes au collage sur tissus et matériaux non tissés, au revêtement de fibres naturelles ou synthétiques, de mousses.

Les matériaux multicouches particulièrement préférés par la demanderesse comprennent
- une couche de polyamide aliphatique (tel que PA-6, PA-6.6, PA-11, PA-12, PA-12.12), de polyamide amorphe, d'élastomère thermoplastique à base de polyamide et/ou de copolymère d'éthylène et d'alcool vinylique (EVOH)
- une couche de composition (b) selon l'invention.

Ces films peuvent être collés sur des pièces rigides et notamment sur des pièces métalliques (telles que des câbles, tôles) sur des pièces en bois ainsi que sur des matériaux synthétiques de préférence à base de, recouverts ou imprégnés de résine(s) époxyde(s) et/ou polyester(s) et/ou polyuréthane(s).

Le procédé de fabrication de ces matériaux composites peut se dérouler en 2 étapes :

On procède d'abord à la co-extrusion du film bi-couche puis on le colle à chaud du côté de la couche de composition selon l'invention , sur le support rigide par exemple, par formage à chaud ou thermoformage.

Ces matériaux composites peuvent être décorés selon la méthode d'impression de transfert d'encres sublimables et notamment selon les procédés décrits dans la demande de brevet FR 2 596 286. La décoration de ces matériaux peut également être mise en oeuvre selon d'autres techniques telles que par sérigraphie, peinture ou vernissage, transfert à chaud, tampographie, jet d'encre, marquage-laser, étant entendu que les techniques de décoration peuvent s'appliquer aux compositions selon l'invention sous n'importe quelle forme (film, pièces moulées, fibres...)

Les matériaux composites constitués du film bi-couche décrit ci-dessus et d'un support imprégné de résine(s) époxyde(s) et/ou polyester(s) et/ou polyuréthane(s) éventuellement décorés sont particulièrement adaptés pour la réalisation de ski nautique, de planche à voile, à roulettes, planche de surf, coques de bateau, panneaux de décoration pour bas de carrosserie automobile, laminés anti-bruit, ou d'isolation thermique.

Les compositions (b) selon l'invention sous forme de films mono-couche peuvent également servir de liant de co-extrusion pour films multicouches permettant de faire adhérer des couches dont le collage est difficile voire impossible.

A titre d'exemple, on peut citer l'utilisation de films de composition (b) selon l'invention comme liant de co-extrusion d'un film à base de polycarbonate (PC) d'une part et d'un film à base de copolymere a'ethylène et d'alcool vinylique (EVOH) d'autre part.

Les compositions (b) selon l'invention sous forme de films mono- ou multi-couche sont particulièrement aptes à la réalisation de complexes mousse/tissu selon la technique du "Foam baking". Dans une machine de lamination on superpose au moins un assemblage constitué d'une pièce de tissu, d'un film selon l'invention et éventuellement d'une couche de mousse puis procède au laminage à chaud du complexe ci-dessus.

Après refroidissement on dispose ledit complexe dans un moule et injecte une mousse thermodurcissable, par exemple de type polyuréthane. La réaction d'expansion in situ des constituants de la mousse provoque l'adhésion du complexe sur la mousse.

La présence du film selon l'invention entre la pièce de tissu et la mousse se révèle particulièrement avantageuse car elle empêche la pénétration de la mousse à travers le tissu.

Les exemples suivants illustrent l'invention sans toutefois la limiter :

Sauf indication contraire dans tout ce qui suit, les proportions des constituants sont données en poids.

### EXEMPLE I

1. Dans une extrudeuse mono-vis dont la vitesse de la vis est réglée à 150 trs/mn, on compounde 60 parties de polyéther estéramide (A1) et 40 parties de copolymère d'éthylène et d'acétate de vinyle maléisé (B1).

La température d'extrusion est comprise entre 200 et 250°C et le débit de l'extrudeuse est fixé à 20 kg/h.

En sortie de filière, la composition obtenue sous forme de joncs de granulométrie moyenne égale à environ 3 mm a un melt index (MI) de 1,31 mesuré à 190°C sous une charge de 2,16 kg selon la norme ASTM D 1238.

Le polyétheresteramide (A1) utilisé est constitué de 88 % de séquences de PA-12 (Mn = 5 000) et de 12 % de séquences de PTMG (B1) (Mn = 650).

L'EVA maléisé utilisé contient 18 % d'acétate de vinyle et 0,27 % d'anhydride maléique, sa température de fusion est égale à 86°C et son point Vicat mesuré selon la norme D 1525 est égal à 61°C.

Dans le Tableau 1, sont indiqués :
- la dureté Shore D (5s) mesurée selon la norme ISO 868
- le module d'élasticité en flexion à 20°C et le coefficient de rigidification entre 20 et -20°C mesurés selon la norme ASTM D 790
- la résistance à la déchirure mesurée selon la norme ISO 34 (méthode B) (déchirure perpendiculaire à l'injection)
- la résistance au choc Izod avec entaille mesurée selon la norme ISO 180
- la contrainte à la rupture en traction mesurée à -40°C selon la norme ASTM D 638.
   pour la composition I.1 et pour les constituants A1 et B1.

On procède ensuite à la coextrusion d'une feuille bi-couche PA-11//composition I.1.

Les conditions de co-extrusion sont les suivantes :

| | |
|---|---|
| **températures d'extrusion** | |
| **du PA-11** | 210°C/230°C/240°C/240°C |
| **de I.1** | 205°C/230°C/230°C/230°C |
| **température filière** | 245°C |
| **température calandres** | 50°C/35°C/50°C |

En sortie de filière on obtient un bi-couche constitué :
- d'une couche de PA-11 (Mn = 20 000) d'épaisseur égale à environ 0,3 mm
- d'une couche de composition I.1 d'épaisseur égale à environ 0,5 mm.

On procède ensuite au collage à chaud du film bi-couche ci-dessus sur un support époxyde constitué de nappes textiles (tissu de verre) imprégnées de 30 % de résine époxyde à base de bisphénol-A en présence d'un durcisseur amine de type M.D.I et d'un accélérateur de réticulation.

Le bicouche est collé sur le support dans un moule à une température d'environ 150°C sous une pression de 8 kg/cm² puis refroidi avant démoulage.

On mesure l'adhérence du bi-couche sur le support époxyde après 72 heures dans l'eau distillée selon la norme NFT 76-112.

Les résultats d'adhérence réunis dans le Tableau 2 correspondent à des valeurs moyennes calculées à partir de 5 essais.

2. On compounde dans les mêmes conditions qu'en I.1 une composition (I.2) constituée de 90 parties de I.1 et de 10 parties de fibres de verre de longueur moyenne égale à 4 mm.

Cette composition est ensuite co-extrudée avec du PA-11 de mêmes caractéristiques qu'en I.1. Le bi-couche obtenu est constitué
- d'une couche de PA-11 d'épaisseur égale à environ 0,3 mm
- d'une couche de composition I.2 d'épaisseur égale à environ 0,5 mm.

Il est ensuite collé sur un support époxyde dans les mêmes conditions qu'en I.1.

Les résultats d'adhérence sont réunis dans le Tableau 2.

3.On compounde dans les mêmes conditions qu'en I.1 une composition (I.3) constituée de 90 parties de I.1 et de 10 parties de fibres de verre de longueur moyenne égale à 4 mm.

Cette composition est ensuite co-extrudée avec du PA-11 de mêmes caractéristiques qu'en I.1. Le bi-couche obtenu est constitué
- d'une couche de PA-11 d'épaisseur égale à environ 0,3 mm
- d'une couche de composition I.3 d'épaisseur égale à environ 0,5 mm.

Il est ensuite collé sur un support époxyde dans les mêmes conditions qu'en I.1.

Les résultats d'adhérence sont réunis dans le Tableau 2.

4. On compounde dans les mêmes conditions qu'en I.1 une composition (I.4) constituée de 80 parties de I.1 et de 20 parties de CaCO₃ de granulométrie moyenne 40 µm.

Cette composition est ensuite co-extrudée avec du PA-11 de mêmes caractéristiques qu'en I.1. Le bi-couche obtenu est constitué
- d'une couche de PA-11 d'épaisseur égale à environ 0,3 mm
- d'une couche de composition I.4 d'épaisseur égale à environ 0,5 mm.

### EXEMPLE II

Dans les mêmes conditions qu'en I.1, on compounde 60 parties de polyétheresteramide (A1) et 40 parties de copolymère d'éthylène et d'acétate de vinyle maléisé (B2) contenant 28 % d'acétate de vinyle et 0,2 % d'anhydride maléique (point de fusion : 75°C : point Vicat : 57°C). La composition obtenue (II) (MI = 1,89) est ensuite co-extrudée avec du PA-11 puis collée sur un support époxyde dans les mêmes conditions qu'en I.1.

Les caractéristiques de B2 et II sont réunies dans le Tableau 1.

Les résultats d'adhérence sont réunis dans le Tableau 2.

### EXEMPLE III

Dans les mêmes conditions qu'en I.1, on compounde 60 parties de polyétheresteramide (A1) et 40 parties de copolymère d'éthylène et d'acétate de vinyle (B3) contenant 28 % d'acétate de vinyle (MI = 3).

La composition (III) obtenue (MI = 3,5) est ensuite coextrudée avec du PA-11 puis collée sur un support époxyde dans les mêmes conditions qu'en I.1.

Les caractéristiques de B3 et III sont réunies dans le Tableau 1.

Les résultats d'adhérence sont réunis dans le Tableau 2.

### EXEMPLE IV (Comparatif)

A titre de comparaison et selon la demande de brevet EP 312 968, on compounde dans les mêmes conditions qu'en I.1 50 parties de polyétheresteramide (A2), 1 partie de silane, 19 parties de talc et 30 parties de résines tackifiantes.

Le polyétheresteramide A2 est constitué de 50 % de séquences de PA-12 (Mn = 2 000) et de 50 % de séquences de PTMG (Mn = 2 000).

La composition obtenue (IV) (MI = 4) est ensuite co-extrudée avec du PA-11 puis collée sur un support époxyde dans les mêmes conditions qu'en I.1.

Les résultats d'adhérence sont réunis dans le Tableau 2.

### EXEMPLE V

Dans les mêmes conditions qu'en I.1, on compounde 80 parties de polyétheresteramide (A1) et 20 parties de SBS maléisé (B4).

Le SBS maléisé est un copolymère bloc styrène/butadiène-1,3/styrène contenant 30 % de styrène et 0,2 % d'anhydride maléique et de MI = 4.

La composition (V) obtenue est ensuite co-extrudée avec du PA-11 puis collée sur un support époxyde dans les mêmes conditions qu'en I.1.

### EXEMPLE VI

Dans les mêmes conditions qu'en I.1, on compounde 60 parties de polyétheresteramide (A₁) et 40 parties de copolymère d'éthylène d'acétate de vinyle et de méthacrylate de glycidyle (B₆)(MI = 10 ; point de fusion = 97°C).

La température d'extrusion est comprise entre 175 et 225°C, la vitesse de la vis est de 150 trs/mn et le débit de l'extrudeuse est fixé à 30 kg/h.

### EXEMPLE VII

Dans les mêmes conditions qu'en I.2, on compounde 60 parties de polyétheresteramide (A₂) et 40 parties d'EVA (B₃).

La composition obtenue VII est ensuite moulée sous forme de plaquette de nez.

Les caractéristiques de B₃ et de VII sont réunies dans le Tableau 1.

### EXEMPLE VIII

1. Dans les mêmes conditions qu'en I.1, on compounde 90 parties de polyétheresteramide (A₃) et 10 parties d'EVA maléisé (B₇).

Le polyétheresteramide A3 utilisé contient 30 % de séquences de PA-12 (Mn = 850) et 70 % de séquences de PTMG (Mn = 2 000).

L'EVA maléisé B₇ contient 14 % d'acétate de vinyle et 0,35 % d'anhydride maléique. Sa température de fusion est égale à 94°C et son point Vicat à 71°C.

La composition VIII est ensuite extrudée sous forme de feuille d'épaisseur 100 µm puis collée sur un textile.

2. Dans les mêmes conditions que sous 1 on réalise un film d'épaisseur 100 µm que l'on colle sur un textile constitué de 80 parties de A₃ et 20 parties de B₇.

3. Dans les mêmes conditions que sous 1 on réalise un film d'épaisseur 100 µm constitué de 70 parties de A₃ et 30 parties de B que l'on colle sur un textile.

### EXEMPLE IX

1. Dans les mêmes conditions qu'en I.1, on compounde 30 parties de A₃, 42 parties de B₃, 28 parties de CaCO₃ et 3 parties de mélange-maître blanc.

la composition IX (d = 1,18) est ensuite moulée par injection sous forme de balle de golf de practice (balle pleine) de masse égale à 45,17 g.

La température d'injection est comprise entre 190 et 200°C, le cycle global de moulage est de 46 s dont 23 s de refroidissement.

On mesure la hauteur de rebond de la balle ci-dessus lâchée sans vitesse initiale (hauteur de chute 150 cm) sur du parquet vitrifié à l'aide d'une caméra (distance focale : 5,6) placée à 0,4 m de l'écran de mesure.

La hauteur de rebond est égale à 91,85 cm.

### EXEMPLE X

Dans les mêmes conditions qu'en I.1, on compounde 40 parties de A₃, 36 parties de B3, 24 parties de CaCO₃ et 3 parties de mélange-maître blanc.

La composition X (d = 1,16) est ensuite moulée dans les mêmes conditions qu'en IX sous forme d'une balle de golf pleine de masse égale à 44,53 g.

La hauteur de rebond, mesurée comme en IX est de 93,6 cm.

### EXEMPLE XI

La composition (III) est co-extrudée avec de l'EVOH (contenant 44 % d'éthylène ; d = 1,14 ; MI = 3,5 ; point de fusion : 164°C).

Les conditions de co-extrusion sont les suivantes :

| | |
|---|---|
| **température d'extrusion** | |
| **de l'EVOH** | 200°C/220°C/235°C |
| **de III** | 200°C/210°C/220°C/230°C |
| **température filière** | 220°C |
| **température calandres** | 50°C/35°C/50°C |

En sortie de filière, on obtient un bi-couche constitué :
- d'une couche d' EVOH d'épaisseur égale à environ 0,3 mm
- d'une couche de composition III d'épaisseur égale à environ 0,8 mm.

### EXEMPLE XII

Dans les mêmes conditions qu'en I.1, on compounde 70 parties de polyétheresteramide (A₄) et 30 parties de B₇.

Le polyétheresteramide A₄ est constitué de 80 % de séquences de PA-12 (Mn = 4 000) et de 20 % de séquences de PTMG (Mn = 1 000).

La composition (XII) obtenue est ensuite utilisée comme liant de co-extrusion entre de l'EVOH et du polycarbonate cristal.

L'EVOH utilisé a les mêmes caractéristiques que celui de l'exemple XI.

Le polycarbonate cristal utilisé est commercialisé par General Electric Company, sous la marque LEXAN 154.

Les conditions de coextrusion sont les suivantes :

| | |
|---|---|
| **températures d'extrusion** | |
| **de l'EVOH** | 190°C/200°C/205°C/210°C |
| **de XII** | 185°C/190°C/190°C/190°C |
| **température du PC cristal** | 270°C/275°C/270°C/270°C |
| **témpérature filière** | 250°C |
| **température calandres** | 45°C/50°C/50°C |

En sortie de filière, on obtient un bi-couche constitué :
- d'une couche d' EVOH d'épaisseur égale à environ 0,3 mm
- d'une couche de XII d'épaisseur égale à environ 0,1 mm.
- d'une couche de PC cristal d'épaisseur égale à environ 0,3 mm.

On mesure le pelage à 180° du tri-couche sur une éprouvette de 15 mm de largeur en soumettant chacune des couches externes à une traction (vitesse de traction = 100 mm/mn).

Le pelage obtenu, exprimé en g/10 mm, est égal à 910.

**TABLEAU 1**

| **CARACTERISTIQUES** | **I.1 A1+B1** | **II A1+B2** | **III A1+B3** | **VII A**_{**2**}**+B**_{**3**} | **A1** | **A2** | **B1** | **B3** |
|---|---|---|---|---|---|---|---|---|
| Dureté Shore D | 50 | 55 | 55 | 38 | 70 | 40 | 31 | 26 |
| Module Flexion (MPa) | 215 | 226 | 221 | 49 | 460 | 75 | 40 | 22 |
| Coefficient rigidification | 3,2 | 3,1 | 3,1 | | | | 4,07 | 2,36 |
| Résistance déchirure (kN/m) | 160 | | 131 | 63 | | 70 | 49,3 | 37,7 |
| Choc Izod (kJ/m²) | 4,8 | | 4,7 | | 5 | | 2,7 | 2,5 |
| Contrainte rupture (MPa) | 31 | | 35,3 | 14,9 | 50 | 36 | 19,4 | 19,7 |

**TABLEAU 2**

| **N° EXEMPLE** | **ADHERENCE (N/mm)** |
|---|---|
| I.1 | 10 |
| I.2 | 11,6 |
| I.3 | 12,9 |
| II | 15,2 |
| III | 15,9 |
| IV | 9 |

## Revendications

1. Matériau multicouches comprenant :
a une couche de polyamide aliphatique ou polyamide amorphe ou polyesteramide ou polyétheramide ou copolymère EVOH,
b un film comprenant un mélange :
b1 de polyesteramide ou polyétheramide
b2 d'une polyoléfine modifiée et tel que b1 / (b1 + b2) en poids est supérieur à 50 %.
La polyoléfine modifiée étant choisie parmi :
- les copolymères comprenant (i) un monomère d'éthylène ou d'alpha oléfine ou éventuellement de dioléfine et (ii) au moins un comonomère choisi parmi les esters vinyliques d'acide carboxylique saturé, les acides mono- et dicarboxyliques insaturés, leurs esters, sels, les anhydrides d'acides dicarboxyliques ; ces copolymères comprenant au moins 50 % en poids d'oléfines ;
- les copolymères blocs SBS, SIS ou SEBS maléisés.

2. Matériau selon la revendication 1 caractérisé en ce qu'il comprend les couches coextrudées a et b collées par formage à chaud du côté de la couche b sur un support rigide.

3. Matériau selon la revendication 2 caractérisé en ce que le support rigide est à base de, recouvert ou imprégné de résine époxyde, de polyester ou de polyuréthanne.

4. Matériau comprenant successivement :
- un film à base de polycarbonate
- le film b de la revendication 1
- un film à base de copolymère EVOH.

5. Matériau comprenant successivement :
- un tissu
- le film b de la revendication 1
- une mousse thermodurcissable.

## Patentansprüche

1. Mehrschichtaterial, umfassend:
a) eine Schicht aus einem aliphatischen Polyamid, einem amorphen Polyamid, einem Polyesteramid, einem Polyetheramid oder EVOH-Copolymeren,
b) einen Film, umfassend eine Mischung aus:
b1) Polyesteramid oder Polyetheramid und
b2) einem modifizierten Polyolefin, wobei b1/(b1 + b2) mehr als 50% des Gewichts ausmacht, wobei das modifizierte Polyolefin ausgewählt ist unter:
- Copolymeren mit (i) einem Monomeren von Ethylen oder alpha-Olefin oder gegebenenfalls einem Diolefin und (ii) mindestens einem Comonomeren, das unter Vinylestern gesättigter Carbonsäuren, ungesättigten Mono- und Dicarbonsäuren, deren Estern und Salzen und Dicarbonsäureanhydriden ausgewählt ist; wobei die Copolymeren mindestens 50 Gew.-% Olefine enthalten;
- den maleinsäuremodifizierten Blockcopolymeren SBS, SIS oder SEBS.

2. Material nach Anspruch 1, dadurch gekennzeichnet, daß es koextrudierte Schichten a und b umfaßt, die durch Formgebung in der Wärme mit der Seite der Schicht b auf einen starren Träger geklebt sind.

3. Material nach Anspruch 2, dadurch gekennzeichnet, daß es sich um einen starren Träger auf der Basis von Polyester oder Polyurethan handelt, der mit Epoxidharz beschichtet oder imprägniert ist.

4. Material, umfassend aufeinanderfolgend:
- einen Film auf Polycarbonatbasis,
- den Film b nach Anspruch 1 und
- einen Film auf EVOH-Copolymerbasis.

5. Material, umfassend aufeinanderfolgend:
- ein Gewebe
- den Film b nach Anspruch 1 und
- einen wärmehärtbaren Schaum.

## Claims

1. Multilayer material including:
a a layer of aliphatic polyamide or amorphous polyamide or polyesteramide or polyetheramide or EVOH copolymer,
b a film including a mixture:
b1 of polyesteramide or polyetheramide
b2 of a modified polyolefin, and such that b1/(b1+b2) by weight is higher than 50 %,
the modified polyolefin being chosen from:
- copolymers including (i) an ethylene or alphaolefin or optionally diolefin monomer and (ii) at least one comonomer chosen from the vinyl esters of saturated carboxylic acid, unsaturated mono- and dicarboxylic acids, their esters, salts and the anhydrides of dicarboxylic acids, these copolymers including at least 50 % by weight of olefins;
- maleinized SBS, SIS or SEBS block copolymers.

2. Material according to Claim 1, characterized in that it includes the coextruded layers a and b which are adhesively bonded by hot forming on the side of the layer b onto a rigid support.

3. Material according to Claim 2, characterized in that the rigid support is based on or covered or impregnated with epoxy resin, polyester or polyurethane.

4. Material including, in succession:
- a film based on polycarbonate
- the film b of Claim 1
- a film based on EVOH copolymer.

5. Material including, in succession:
- a fabric
- the film b of Claim 1
- a heat-curable foam.
